# EUROPEAN PATENT APPLICATION

(11) **EP 2 413 236 A1**
(43) Date of publication of application: **01.02.2012**
(21) Application number: 10171294.1
(22) Date of filing: 29.07.2010
(51) Int. Cl.: G06F 7/22, G06F 7/544, G06F 17/18

(54) **Partial averaging circuit and method**

(71) Applicant: NXP B.V., 5656 AG Eindhoven (NL)
(72) Inventor: Vermeulen, Hubertus Gerardus Hendrikus, 5656 AE Eindhoven (NL); Staschulat, Jan, 5656 AE Eindhoven (NL); Nieuwland, Andre Krijn, 5656 AE Eindhoven (NL); Steffens, Elisabeth Francisca Maria, 5656 AE Eindhoven (NL)
(74) Representative: Schouten, Marcus Maria

(57) **Abstract**

The present invention relates to a circuit (200) for sorting a set of data values (202), the circuit comprising a first set (220) of p+q registers (220a-c) for storing the p+q largest data values of the set of data values including p statistical outliers; a second set (230) of p+q registers (230a-c) for storing the p+q smallest data values of the set of data values including p statistical outliers, wherein p is a non-negative integer and q is a positive integer; a controller (210) coupled to each register in said first and second sets, said controller being arranged to: receive the set of data values and for each data value obtain a comparison result of the data value with the respective data values in each of said registers; and update said registers as a function of said comparison results; the circuit further comprising a data processing circuit (260) coupled to at least the q registers in said first and second sets, which for instance may be used to produce an average value (204) of the data values stored in said q registers in response to the controller. The present invention further relates to a sorting method using such a circuit.

## Description

### FIELD OF THE INVENTION

The present invention relates to a circuit for sorting a set of data values.

The present invention further relates to a method of sorting a set of data values using such a circuit.

### BACKGROUND OF THE INVENTION

Nowadays, many electronic systems have to be able to cope with large volumes of simultaneously transmitted data in a robust and fault-tolerant manner. Such requirements are for instance of paramount importance in application domains where the correct functioning of a complex system depends on the fault-free operation of the electronic system included in the complex system. Examples of such complex systems include systems that when operating incorrectly may jeopardize the safety of a person operating the system, such as vehicles. For this reason, it has taken a long time for electronic systems being entrusted with managing critical functionality of such complex systems, e.g. fly-by-wire and drive-by-wire being non-limiting examples of such critical functionality.

However, the ever-increasing ability of circuitry to implement complex functions has recently seen a shift towards a more receptive attitude towards electronics being entrusted with operations of a wide variety of more or less critical functions in complex systems. For instance, in the automotive industry, continuing efforts are taking place to provide standardized electronic control networks for vehicles, which makes it easier to design additional functionality for such standardized networks, as the communication protocols between the various components of the network are defined in the standard. An example of such an in-car network communication protocol is the FlexRay^{™} protocol, a description of which can be found on www.flexray.com.

One of the major challenges in providing robust and fault-tolerant in-car networks is the fact that the network may comprise a large number of discrete and independent components, which nevertheless may need to communicate with each other in a synchronized manner. To this end, communication cycles may be defined, with the simultaneous initialization of the communication cycles for each of these independent components being a challenging task.

In FlexRay^{™}, a multi-master distributed clock synchronization mechanism is applied in which up to 15 master components can send a synchronization message, with each node adjusting their local view of global time based on the reception of these synchronization messages. As some of these messages may however suffer some form of corruption, e.g. an unexpected delay, each node applies a voting mechanism based on the fault-tolerant midpoint algorithm (FTMA). In FTMA, the p highest and p lowest values are discarded, after which an average value is calculated for the set of remaining values from the q highest and q lowest remaining values, with p is a non-negative integer and q is a positive integer. The FTMA may also be used in other applications within or outside FlexRay^{™} where it is necessary to implement fault-tolerance by means of e.g. majority voting.

A practical problem associated with the implementation of the FTMA is that it can be expensive in terms of hardware requirements. As FTMA relies on a sorting algorithm to identify the p+q highest and p+q lowest values, current implementations of the FTMA may rely on the provision of a memory that can store all received values to be sorted, with a microcontroller operating on the set of data stored in the memory to identify the sets of highest and lowest values, and calculate the average value of the set in accordance with the FTMA. For large sets of data, this may require an excessively large memory, which may not be feasible in terms of cost and/or available silicon area. In addition, the sorting must be done in a post-processing step, i.e. after all data values have been received, which may lead to unacceptably long processing times for large data sets, especially if large numbers of data have to be averaged, and/or if the data has large values, i.e. is represented by a large number of bits.

### SUMMARY OF THE INVENTION

The present invention seeks to provide a circuit for sorting a set of data that is more efficient in terms of area and throughput time.

The present invention further seeks to provide a method of sorting data values using such an improved circuit.

According to a first aspect of the present invention, there is provided a circuit for sorting a set of data values, the circuit comprising a first set of p+q registers for storing the p+q largest data values of the set of data values including p statistical outliers; a second set of p+q registers for storing the p+q smallest data values, wherein p is a non-negative integer and q is a positive integer; a controller coupled to each register in said first and second sets, said controller being arranged to receive the set of data values and for each data value obtain a comparison result of the data value with the respective data values in each of said registers; and update said registers as a function of said comparison results; the circuit further comprising a data processing circuit coupled to at least the q registers in said first and second sets for processing at least oneof the data values stored in each of said registers in response to the controller.

The present invention is based on the realization that fault-tolerant sorting algorithms such as FTMA do not require all data values to be stored as typically only a few data values are used for producing the processed data value, which may be an averaged value, a sum value, a difference value and so on. Consequently, by providing two sets of registers, which combined size is typically substantially smaller than the total number of data values in the set of data values to be averaged, an on-the-fly comparison may be made between received data values and data values already stored in the registers such that once the last data value has been received, the sorting result is almost immediately available. Hence, the circuit of the present invention provides a more compact implementation of such a sorting algorithm due to the fact that only a fraction of the total number of incoming data values are actually stored, whilst at the same time providing a much improved throughput time due to the fact that the sorting of the data values is done during rather than after receiving the data values. This further yields a significant power saving compared to known implementations of such sorting algorithms.

In a preferred embodiment, the controller is adapted to insert a received data value in a register of the first set if said received data value is larger than a data value stored in said register; insert a received data value in a register of the second set if said received data value is smaller than a data value stored in said register; and discard a received data value if said received data is not larger than any of the data values stored in the registers of the first set nor smaller than any of the data values stored in the registers of the second set. To this end, the controller may be arranged to update said registers by instructions selected from an instruction set including a load instruction for overwriting a register data value with a current data value; and a shift instruction for shifting a register data value to a neighboring shift register.

The controller may be further arranged to store the highest possible data value in each register in the second set and store the lowest possible data value in each register in the first set upon initialization of the circuit. This ensures that all data values that are subsequently received by the circuit will be placed in the correct position in the registers.

In an embodiment, each register comprises a comparator for comparing the data value stored in the register with a data value provided by the controller, and for providing the controller with the comparison result. This for instance makes it possible to perform the comparisons between the received data value and the data values stored in the respective registers of the first and second sets in parallel. Alternatively, the controller may comprise 2(p+q) comparators for facilitating such parallel comparisons.

In case not all q data values of each set of registers need to be averaged, the circuit may further comprise a first multiplexer coupled between the first set of registers and the averaging circuit; and a second multiplexer coupled between the second set of registers and the averaging circuit, the first and second multiplexers being controlled by a selection signal generated by the controller for selecting the register data values to be averaged by the averaging circuit. This facilitates the selection of a particular one of the q registers in each register set. This is for instance advantageous if it cannot be predicted beforehand how many data values will be received by the circuit, with this number influencing which or how many of the q registers should be selected for averaging.

In an embodiment, the controller further comprises a look-up table for generating the selection signal as a function of the number of received data values; and a counter for counting the number of received data values, said look-up table being responsive to said counter. This facilitates a straightforward selection of the appropriate registers for averaging, and has the additional advantage that the look-up table may be (re-)programmed such that the circuit may implement different sorting algorithms having different data selection requirements.

The circuit of the present invention may be advantageously included in a communication controller such as a FlexRay^{™} communication controller.

In accordance with a further aspect of the present invention, there is provided a method of sorting a set of data values using the circuit of the present invention, the method comprising repeating the steps of receiving a data value; comparing the data value with the data values in the registers of the first and second sets; and, if necessary, updating the data values in the registers of the first and second sets as a function of said comparisons; until all data values have been received, the method further comprising processing at least one data value stored in the first set of registers and at least one data value stored in the second set of registers; and producing an output signal indicative of said processed value. Hence, this method provides a reduction in processing time before the processed result such as an average result, a summed result, a difference result and so on is produced, for reasons already explained in more detail above.

Preferably, the method comprises the step of updating the data values in the registers of the first and second sets as a function of said comparisons comprises inserting a received data value in a register of the first set if said received data value is larger than a data value stored in said register; inserting a received data value in a register of the second set if said received data value is smaller than a data value stored in said register.

In an embodiment, the step of calculating a processed value of at least one data value stored in the first set of registers and at least one data value stored in the second set of registers comprises selecting a first data value from the first set of registers and a second data value from the second set of registers, and calculating the average of the first data value and the second data value.

In a further embodiment, the method further comprises counting the number of received data values, and wherein the step of selecting a first data value from the first set of registers and a second data value from the second set of registers is controlled by the counted number of received data values.

Preferably, the step of comparing the data value with the data values in the registers of the first and second sets comprises comparing the received data value with each of said data values stored in said registers in parallel. This further improves the sorting speed of the circuit as previously explained.

### BRIEF DESCRIPTION OF THE EMBODIMENTS

Embodiments of the invention are described in more detail and by way of non-limiting examples with reference to the accompanying drawings, wherein
FIG. 1 schematically depicts an algorithm for a clock correction value calculation within FlexRay^{™};
FIG. 2 schematically depicts a sorting circuit for implementing such an algorithm in accordance with a preferred embodiment of the present invention; and
FIG. 3 depicts a flow chart of an embodiment of the method of the present invention.

### DETAILED DESCRIPTION OF THE DRAWINGS

It should be understood that the Figures are merely schematic and are not drawn to scale. It should also be understood that the same reference numerals are used throughout the Figures to indicate the same or similar parts.

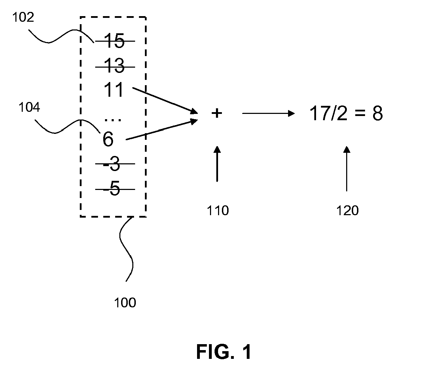

FIG. 1 schematically depicts a fault-tolerant sorting algorithm that may be implemented by the circuit and method of the present invention. A sorted table 100 stores a number of data values received from one or more sources, including a number of statistical outliers 102 and data values 104 that are considered relevant. After construction of the sorted table 100, selected relevant data values 104 are added in operation 110 after which a mean or average of the combined value of the selected relevant data values 104 is calculated in operation 120. As previously explained the routine implementation of this algorithm is to provide a memory for storing the table 100 and provide a processor that implements a sorting algorithm as well as the operations 110 and 120 which performs a number of post-processing steps on the table 100 to produce the relevant average value from the sorted data. This is costly in terms of hardware due to the fact that all data values have to be stored in table 100 and is time-consuming due to the fact that both the sorting as well as the average calculation can only be performed once all data values have been stored in table 100. In addition, this routine implementation consumes more power than the embodiments of the present invention described in more detail below.

In sorting algorithms such as FTMA, the number of statistical outliers is typically determined based on the total number of data values in the set of data values to be processed by the algorithm. For instance, the implementation of FTMA in FlexRay^{™} for the purpose of clock value correction uses the following relationship between the total number of data values in the set of data values and the number of statistical outliers to be discarded (Table I):

**Table I**

| # of data values in a data set | # of statistical outliers to be discarded (=2p) |
|---|---|
| 1-2 | 0 |
| 3-7 | 2 |
| >7 | 4 |

The number of statistical outliers to be discarded typically is an even number as for each high value statistical outlier to be discarded, a low value statistical outlier is also discarded, as for instance is apparent from FIG. 1. In the context of the present invention, a statistical outlier is a data value at the extremes of a sorted set of data values, which is to be removed to improve the statistical relevance of an average or mean taken over the data values in the set of data.

The list 100 can be divided in two halves, an upper half and a lower half, from which the same number of statistical outliers is to be removed based on a predetermined metric, which may be the total number of received data values or any other suitable metric. The number of statistical outliers to be removed from each half may be defined as p, in which p is a non-negative integer, i.e. p≥0.

After removal of the statistical outliers from the sorted data set, the algorithm typically processes the q data values from each half, for instance calculates an average value of the remaining data values, as previously mentioned. This average may be calculated explicitly, i.e. by summing all N remaining values and calculating the average by dividing the sum by N, N being a positive integer.

Alternatively, the algorithm may select a number of extreme values, i.e. the q highest values and the q lowest values from the remaining data set, with q being a positive integer, i.e. q≥1 and calculate an average or mean over the selected 2q values. This approach generally works well for data sets that exhibit a relatively homogenous spread of data values. In practice, most data sets processed in application domains such as FlexRay^{™} networks exhibit such homogeneous spreads as these spreads are typically caused by delay variations over the network utilizing the FlexRay^{™} protocol. It will be apparent that most electronic application domains are suitable for such a truncated averaging approach, as most electronic application domains typically exhibit homogenous spreads in data sets having data values that for instance vary in value because of local variations in the electronic circuit.

The present invention is based on the insight that in case of such data sets with homogeneous spreads, each half of the table 100 only contains p+q relevant data values. All other data values will not be considered in the averaging step, such that large numbers of data values do not have to be stored but may be immediately discarded.

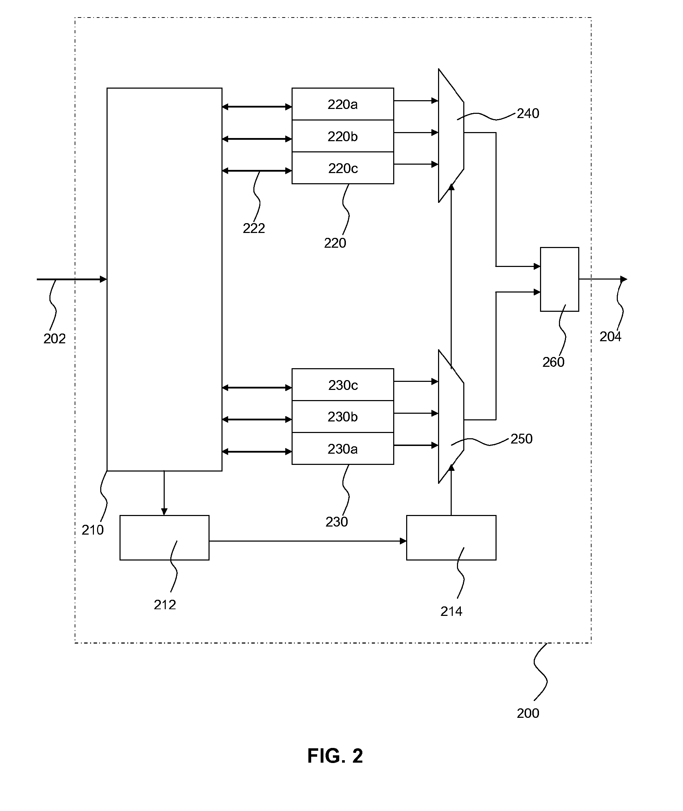

A circuit in which these insights have been utilized is shown in FIG.2. The circuit 200 comprises a controller 210 adapted to receive a stream of input values 202. The controller 210 is coupled to a first set 220 of registers 220a-c, in which the p+q values of the upper half of the table 100 are to be stored, and is furthermore coupled to a second set 230 of registers 230a-230c, in which the p+q values of the upper half of the table 100 are to be stored. Three registers are shown in each set by way of non-limiting example only. It should be appreciated that the sets 220, 230 may comprise any suitable number of registers. The register sets 220, 230 are coupled to an averaging circuit 260 for producing an average value 204 from the q relevant values stored in each set 220, 230. The averaging circuit 260 typically comprises an adder and a divider, implemented in any suitable way, for generating the average value 204.

In case it is *a priori* unknown how many data values will be received, the number of registers for storing the p statistical outliers may be chosen on the basis of a worst case scenario, i.e. the largest number of statistical outliers that may have to be discarded. As can be seen in Table I, a metric is typically available for the algorithm to be implemented to determine the number of statistical outliers for a data set of a given size. The number p may be simply derived from such a metric. Similarly, the number of additional registers for storing the q relevant data values may be based on the number of relevant values typically taken into consideration by the algorithm to be implemented.

As the number of registers in each set 220, 230 may be based on a worst case scenario, it may be necessary to dynamically determine the actual value of in particular p, i.e. the number of statistical outliers in the first set 220 and the second set 230. To this end, the circuit 200 may comprise a counter 212 and a look-up table 214, with the look-up table controlling a first multiplexer 240 placed between the first set 220 of registers 220a-c and the averaging circuit 260 and for controlling a second multiplexer 250 placed between the second set 230 of registers 230a-c and the averaging circuit 260. The counter 212 is adapted to count the number of data values received by the controller 210 whereas the look-up table 214 may be programmed with the metric to dynamically determine the number of statistical outliers 102 to be discarded from each of the sets 220, 230. For instance, the look-up table 214 may implement Table I as shown above. It should however be appreciated that the counter 212, look-up table 214 and multiplexers 240, 250 may be omitted in case the numbers p and q, i.e. which registers will contain the statistical outliers 102, can be predefined.

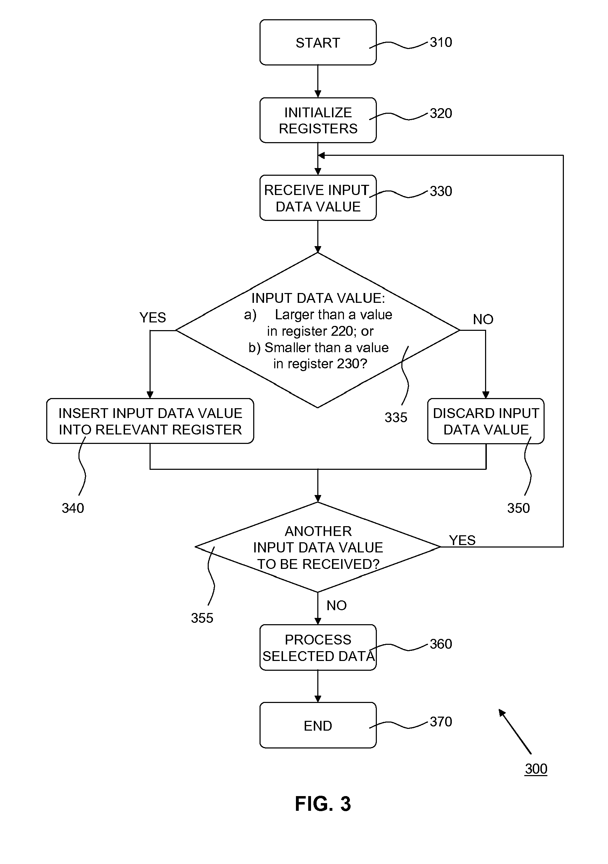

The operation of the circuit 200 will now be explained in more detail with the aid of FIG. 3, which depicts an embodiment of the method of the present invention. The method starts in step 310, after which the method moves to step 320 in which the registers 220a-c and 230a-c are initialized. This is typically done by storing the lowest possible value of an n-bit data element to be received by the controller 210 in the registers 220a-c, and the highest possible value of the n-bit data element in the registers 230a-c. Alternatively, in case the user of the circuit 200 has some *a priori* knowledge of the outer limits of the range of data values 202 to be received, the lower limit value may be stored in the registers 220a-c and the upper limit value may be stored in the registers 230a-c. The initialization step may further optionally comprise resetting the counter 212 and loading the correct data into the look-up table 214.

Upon initialization, the method proceeds to the sorting of the data, as indicated by step 330 in which the controller 210 receives an input data value 202. As indicated in step 335, the controller 210 compares the received data input with the values stored in each of the registers 220a-c and registers 230a-c. To this end, each register may comprise a comparator (not shown), with the controller 210 forwarding the received data value to each register, which returns a comparison result to the controller 210. Typically, as registers 220a-c are intended to store the p+q largest data values in the data set received by the controller 210, the comparators in the set 220 will provide an indication of whether or not the input data value 202 is larger than the data value stored in the corresponding register 220a-c. Similarly, as registers 230a-c are intended to store the p+q smallest data values in the data set received by the controller 210, the comparators in the set 230 will provide an indication of whether or not the input data value 202 is smaller than the data value stored in the corresponding register 230a-c. Alternatively, the comparators may be integrated in the controller 210, in which case the controller 210 will request the registers 220a-c and registers 230a-c to provide a copy of the data value stored in these registers such that the controller 210 can generate the comparison results internally. The comparison results are preferably generated in parallel as this gives the largest performance gain.

If at least one of the comparison results is positive, i.e. the data value received in step 330 is larger than a data value stored in one of the registers 220a-c and/or is smaller than the data value stored in one of the registers 230a-c, the method will proceed to step 340, in which the input data value 202 will be inserted by the controller 210 into the register for which the positive comparison result was obtained using appropriate load and shift instructions, as will become apparent from the following example.

**Table II**

| Register | Data Value |
|---|---|
| 220a | 15 |
| 220b | 11 |
| 220c | 9 |
| 230c | 5 |
| 230b | 3 |
| 230a | 2 |

### Example I.

Controller 210 has received a data element 202 with value 13. The state of register sets 220 and 230 is as shown in Table II. The comparators associated with registers 220b and 220c provide a positive comparison result in step 335, as the value of data element 202 is larger than the data values stored in these registers. All other comparison results are negative as the value of data element 202 is smaller than the value stored in register 220a and larger than any of the values stored in registers 230a-c. The controller 210 subsequently will issue a shift instruction for register 220b to shift its current data value downwards to register 220c, thereby overwriting the data value in register 220c with the data value from 220b, followed by a load instruction for register 220b in which the data value in register 220b is overwritten with the value of the data element 202 received by the controller 210. Alternatively, said shift instruction and said load instruction may be issued in parallel. The resulting state of the registers after the completion of step 340 is shown in Table III:

**Table III:**

| Register | Data Value |
|---|---|
| 220a | 15 |
| 220b | 13 |
| 220c | 11 |
| 230c | 5 |
| 230b | 3 |
| 230a | 2 |

### Example 2.

Controller 210 has received a data element 202 with value 1. The state of register sets 220 and 230 is again as shown in Table II. The comparators associated with registers 230a-c all provide a positive comparison result in step 335, as the value of data element 202 is smaller than the data values stored in these registers. All other comparison results are negative as the value of data element 202 is smaller than the values stored in registers 220a-c. The controller 210 subsequently will issue a shift instruction for registers 230a and 230b to shift their current data value upwards to registers 230b and 230c respectively, thereby overwriting the data value in registers 230b and 230c with the data value from registers 230a and 230b respectively, followed by a load instruction for register 230a in which the data value in register 230a is overwritten with the value of the data element 202 received by the controller 210. Alternatively, said shift instruction and said load instruction may be issued in parallel. The resulting state of the registers after the completion of step 340 is shown in Table IV:

**Table IV**

| Register | Data Value |
|---|---|
| 220a | 15 |
| 220b | 11 |
| 220c | 9 |
| 230c | 3 |
| 230b | 2 |
| 230a | 1 |

As will be apparent from the above examples, the controller 210 ensures that the register set 220 stores the p+q largest data values received by the controller 210 in an ordered fashion, and similarly ensures that register set 230 stores the p+q smallest data values received by the controller 210 in an ordered fashion by applying load and shift instructions to the registers as demonstrated in the above examples.

If on the other hand none of the comparison results generated in step 335 is positive, the data value 202 received by the controller 210 will be discarded in step 350, as it can be concluded that the received data value is an intermediate value, i.e. p+q larger and p+q smaller data values have already been previously received by the circuit 200, that will not be used for calculating the average or mean value of the data set received by the circuit 200.

In step 355 it is determined if the circuit 200 is to receive another input data value 202. This may for instance be done by simply counting the number of already received data values in case of a known number of data values to be expected, in which a comparison of the counted value against this known number can determine whether or not all values have been received, or by waiting for a predetermined amount of time, e.g. a time-out period, with the controller 200 progressing to the averaging step if no further data value is to be received during this waiting period. Other suitable implementations of step 355 will be immediately apparent to the skilled person.

In an alternative embodiment, the average data value is produced by the averaging circuit 260 after every clock cycle. In another embodiment, the average data value is produced by the averaging circuit 260 on demand only. In these embodiments, step 355 may be omitted from the method 300, with the method returning to step 330 following completion of step 340 or step 350. The method 300 may be terminated in this instance e.g. by user intervention.

If a further data value is to be received by the circuit 200, the method 300 reverts back to step 330. Otherwise, if all input data values have been received by the circuit 200, the method proceeds to step 360 in which the average of the q relevant data values in register set 220 and register set 230 is calculated. As previously explained, it may be necessary at this stage to determine which of the registers contain statistical outliers and which of the registers contain the relevant data values, in case it is not *a priori* known how many statistical outliers the registers contain. The number of statistical outliers may be determined by providing the count value of the counter 212 to the look-up table 214, which determines the correct number of statistical outliers based on the values stored in its table, e.g. the statistical outlier selection criteria as shown in Table I above, and uses the determined number of statistical outliers to configure the multiplexers 240 and 250 accordingly. Upon processing the selected data values in step 360, e.g. producing an average of said data values, and producing an output signal 204 indicative of the processed result, the method 300 may terminate in step 370.

In a preferred embodiment, the circuit implements FTMA, with q selected as equal to 1, although it should be appreciated that embodiments in which other sorting algorithms and/or other values of q are implemented are also feasible.

Synthesis experiments have demonstrated that the circuit 200 can be successfully implemented in CMOS technology suitable for implementation in automotive application domains and successfully operated with sufficient parallelism at clock speeds of at least 80 MHz. The circuit 200 can be successfully included in a FlexRay^{™} active star device, which is a communication controller in a network operating the FlexRay^{™} protocol that is responsible for transferring data streams on one branch to all other branches. As active stars typically operate at operation speeds of 10Mbps, it will be clear that the circuit 200 is suitable for implementing the FTMA of such active stars given its ability to implement sufficient parallelism at 80 MHz digital clock speeds.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A circuit (200) for sorting a set of data values (202), the circuit comprising:
a first set (220) of p+q registers (220a-c) for storing the p+q largest data values of the set of data values including p statistical outliers;
a second set (230) of p+q registers (230a-c) for storing the p+q smallest data values of the set of data values including p statistical outliers, wherein p is a non-negative integer and q is a positive integer;
a controller (210) coupled to each register in said first and second sets, said controller being arranged to:
- receive the set of data values and for each data value obtain a comparison result of the data value with the respective data values in each of said registers; and
- update said registers as a function of said comparison results;
the circuit further comprising a data processing circuit (260) coupled to at least the q registers in said first and second sets for processing at least one of the data values from each of said q registers in response to the controller.

2. The circuit (200) of claim 1, wherein the controller (210) is adapted to:
insert the received data value (202) in a register (220a-c) of the first set (220) if said received data value is larger than a data value stored in said register;
insert the received data value in a register (230a-c) of the second set (230) if said received data value is smaller than a data value stored in said register; and
discard the received data value if said received data value is not larger than any of the data values stored in the registers of the first set nor smaller than any of the data values stored in the registers of the second set.

3. The circuit (200) of claim 1, wherein the controller (210) is further arranged to store the highest possible data value in each register (230a-c) of the second set (230) and store the lowest possible data value in each register (220a-c) of the first set (220) upon initialization of the circuit.

4. The circuit (200) of any of claims 1-3, wherein each register (220a-c; 230a-c) comprises a comparator for comparing the data value stored in the register with a data value (202) provided by the controller (210), and for providing the controller with the comparison result.

5. The circuit (200) of claim 4, wherein the controller (210) is arranged to update said registers (220a-c; 230a-c) by instructions selected from an instruction set including:
- a load instruction for overwriting a register data value with a current data value; and
- a shift instruction for shifting a register data value to a neighboring register.

6. The circuit (200) of any of the preceding claims, further comprising:
a first multiplexer (240) coupled between the first set (220) of registers (220a-c) and the averaging circuit (260); and
a second multiplexer (250) coupled between the second set (230) of registers (230a-c) and the averaging circuit, the first and second multiplexers being controlled by a selection signal generated by the controller (210) for selecting the register data values to be averaged by the averaging circuit.

7. The circuit (200) of claim 6, wherein the circuit further comprises:
a look-up table (214) for generating the selection signal as a function of the number of received data values; and
a counter (212) for counting the number of received data values, said look-up table being responsive to said counter.

8. The circuit (200) of any of the preceding claims, wherein the circuit is adapted to perform the comparisons between the received data value (202) and the data values stored in the respective registers (220a-c; 230a-c) of the first and second sets (220; 230) in parallel.

9. A communication controller comprising the circuit (200) of any of claims 1-8.

10. The communication controller of claim 9, wherein the communication controller is a FlexRay^{™} communication controller.

11. A method (300) of sorting a set of data values using the circuit (200) of claim 1, the method comprising repeating the steps of:
- receiving (330) a data value;
- comparing (335) the data value with the data values in the registers of the first and second sets; and
- if necessary, updating (340) the data values in the registers of the first and second sets as a function of said comparisons;
until all data values have been received, the method further comprising processing (360) at least one data value stored in the first set of registers and at least one data value stored in the second set of registers; and
producing an output signal (204) indicative of said average value.

12. The method (300) of claim 11, wherein the step (340) of updating the data values in the registers of the first and second sets as a function of said comparisons comprises:
inserting a received data value in a register of the first set if said received data value falls within the predetermined spread and is higher than a data value stored in said register;
inserting a received data value in a register of the second set if said received data value falls within the predetermined spread and is lower than a data value stored in said register.

13. The method (300) of claim 11 or 12, wherein the step (360) of processing at least one data value stored in the first set of registers and at least one data value stored in the second set of registers comprises selecting a first data value from the first set of registers and a second data value from the second set of registers, and calculating the average of the first data value and the second data value.

14. The method (300) of claim 13, further comprising counting the number of received data values, and wherein the step of selecting a first data value from the first set of registers and a second data value from the second set of registers is controlled by the counted number of received data values.

15. The method (300) of any of claims 11-14, wherein the step (335) of comparing the data value with the data values in the registers of the first and second sets comprises comparing the received data value with each of said data values stored in said registers in parallel.

## Amended claims

### Amended claims in accordance with Rule 137(2) EPC.

**1.** A circuit (200) for producing an average value of a set of homogeneously spread data values (202), the circuit comprising:
a first set (220) of p+q registers (220a-c) for storing the p+q largest data values of the set of data values including p statistical outliers;
a second set (230) of p+q registers (230a-c) for storing the p+q smallest data values of the set of data values including p statistical outliers, wherein p is a non-negative integer and q is a positive integer, and wherein the data set comprises in excess of 2(p+q) data values;
a controller (210) coupled to each register in said first and second sets, said controller being arranged to:
- receive the set of data values and for each data value obtain a comparison result of the data value with the respective data values in each of said registers;
- insert the received data value (202) in a register (220a-c) of the first set (220) if said received data value is larger than a data value stored in said register;
insert the received data value in a register (230a-c) of the second set (230) if said received data value is smaller than a data value stored in said register; and
discard the received data value if said received data value is not larger than any of the data values stored in the registers of the first set nor smaller than any of the data values stored in the registers of the second set;
the circuit further comprising an averaging circuit (260) coupled to at least the q registers in said first and second sets for averaging at least one of the data values from each of said q registers in response to the controller.

**2.** The circuit (200) of claim 1, wherein the controller (210) is further arranged to store the highest possible data value in each register (230a-c) of the second set (230) and store the lowest possible data value in each register (220a-c) of the first set (220) upon initialization of the circuit.

**3.** The circuit (200) of claim 1 or 2, wherein each register (220a-c; 230a-c) comprises a comparator for comparing the data value stored in the register with a data value (202) provided by the controller (210), and for providing the controller with the comparison result.

**4.** The circuit (200) of claim 3, wherein the controller (210) is arranged to update said registers (220a-c; 230a-c) by instructions selected from an instruction set including:
- a load instruction for overwriting a register data value with a current data value; and
- a shift instruction for shifting a register data value to a neighboring register.

**5.** The circuit (200) of any of the preceding claims, further comprising:
a first multiplexer (240) coupled between the first set (220) of registers (220a-c) and the averaging circuit (260); and
a second multiplexer (250) coupled between the second set (230) of registers (230a-c) and the averaging circuit, the first and second multiplexers being controlled by a selection signal generated by the controller (210) for selecting the register data values to be averaged by the averaging circuit.

**6.** The circuit (200) of claim 5, wherein the circuit further comprises:
a look-up table (214) for generating the selection signal as a function of the number of received data values; and
a counter (212) for counting the number of received data values, said look-up table being responsive to said counter.

**7.** The circuit (200) of any of the preceding claims, wherein the circuit is adapted to perform the comparisons between the received data value (202) and the data values stored in the respective registers (220a-c; 230a-c) of the first and second sets (220; 230) in parallel.

**8.** A communication controller comprising the circuit (200) of any of claims 1-7.

**9.** The communication controller of claim 8, wherein the communication controller is a FlexRay^{™} communication controller.

**10.** A method (300) of producing an average value of a set of homogeneously spread data values (202) using the circuit (200) of claim 1, the method comprising repeating the steps of:
- receiving (330) a data value;
- comparing (335) the data value with the data values in the registers of the first and second sets; and
- inserting the received data value in a register of the first set if said received data value falls within a predetermined spread and is higher than a data value stored in said register;
- inserting the received data value in a register of the second set if said received data value falls within the predetermined spread and is flower than a data value stored in said register; and
- discarding the received data value if said received data value is not larger than any of the data values stored in the registers of the first set nor smaller than any of the data values stored in the registers of the second set;
until all data values have been received, the method further comprising:
averaging (360) at least one data value stored in the first set of registers and at least one data value stored in the second set of registers; and
producing an output signal (204) indicative of said average value.

**11.** The method (300) of claim 10, further comprising counting the number of received data values, and wherein the step of selecting a first data value from the first set of registers and a second data value from the second set of registers is controlled by the counted number of received data values.

**12.** The method (300) of claim 10 or 11, wherein the step (335) of comparing the data value with the data values in the registers of the first and second sets comprises comparing the received data value with each of said data values stored in said registers in parallel.
